# EUROPEAN PATENT SPECIFICATION

(11) **EP 3 624 410 B1**
(45) Date of publication and mention of the grant of the patent: **30.12.2020**
(21) Application number: 18194599.9
(22) Date of filing: 14.09.2018
(51) Int. Cl.: H04L 25/02

(54) **SENSING IN WIRELESS COMMUNICATION SYSTEMS**
DETEKTION IN DRAHTLOSKOMMUNIKATIONSSYSTEMEN
DÉTECTION DANS DES SYSTÈMES DE COMMUNICATION SANS FIL

(43) Date of publication of application: 18.03.2020
(73) Proprietor: Nokia Technologies Oy, 02610 Espoo (FI)
(72) Inventor: ALLOULAH, Mohammed, Cambridge CB3 0FA (GB); ISOPOUSSU, Anton, Cambridge CB3 0FA (GB); KAWSAR, Fahim, Cambridge CB3 0FA (GB); MIN, Chulhong, Cambridge CB3 0FA (GB)
(74) Representative: Whiting, Gary

(56) References cited:
- WEI WANG ET AL: "Device-Free Human Activity Recognition Using Commercial WiFi Devices", IEEE JOURNAL ON SELECTED AREAS IN COMMUNICATIONS., vol. 35, no. 5, 1 May 2017 (2017-05-01), pages 1118-1131, XP055563758, US ISSN: 0733-8716, DOI: 10.1109/JSAC.2017.2679658
- ZEMEN T ET AL: "Adaptive Reduced-Rank Estimation of Nonstationary Time-Variant Channels Using Subspace Selection", IEEE TRANSACTIONS ON VEHICULAR TECHNOLOGY, IEEE SERVICE CENTER, PISCATAWAY, NJ, US, vol. 61, no. 9, 1 November 2012 (2012-11-01), pages 4042-4056, XP011481328, ISSN: 0018-9545, DOI: 10.1109/TVT.2012.2211053
- FADEL ADIB ET AL: "See through walls with WiFi!", SIGCOMM, ACM, 2 PENN PLAZA, SUITE 701 NEW YORK NY 10121-0701 USA, 27 August 2013 (2013-08-27), pages 75-86, XP058030656, DOI: 10.1145/2486001.2486039 ISBN: 978-1-4503-2056-6

## Description

### FIELD

The present specification relates to the use of signal processing techniques to infer context information (such as activity or presence) from wireless communication signals.

### BACKGROUND

Systems for sensing in wireless communication systems that seek to infer context information (e.g. activity or presence) from wireless communication signals are known. There remains a need for alternative or improved sensing in wireless communication systems.

The article "Device-Free Human Activity Recognition Using Commercial WiFi Devices" (IEEE Journal on Selected Areas in Communications, Vol. 35, No. 5, 1 May 2017, pages 1118-1131) teaches that since human bodies are good reflectors of wireless signals, human activities can be recognized by monitoring changes in WiFi signals. The paper proposes a Channel State Information (CSI)-based human Activity Recognition and Monitoring system (CARM) based on two theoretical models. First, a CSI-speed model that quantifies the relation between CSI dynamics and human movement speeds. Second, a CSI-activity model that quantifies the relation between human movement speeds and human activities.

### SUMMARY

In a first aspect, this specification describes an apparatus comprising: means for generating statistical channel correlation matrices (for example, by tensor unfolding) at each of a plurality of time instances from a plurality of multi-dimensional arrays or tensors, wherein each of the plurality of arrays or tensors describes a channel impulse or frequency response of a multiple-input, multi-output wireless transmission system at a respective time instance; means for eigen-decomposing said correlation matrices; means for determining a signal subspace extent at each time instance by distinguishing between a signal subspace and a noise subspace; means for extracting eigenvectors (such as receive-side and delay-spread eigenvectors - in principle, one or more of the receive-side, transmit-side and delay-spread eigenvectors could be used) from the eigen-decomposed correlation matrices at each time instance for at least the determined signal subspace; and means for training a machine learning model for generating an output indicative of presence or activity within a defined physical space using at least the determined signal subspace extents and the signal subspace eigenvectors and/or means for generating an output indicative of presence or activity within a defined physical space based on at least the determined signal subspace extents and said signal subspace eigenvectors.

Each of the plurality of arrays or tensors may describe a channel impulse or frequency response at one or more of a transmit-side, receive-side and across a delay-spread of a multiple-input, multi-output wireless transmission system at a respective time instance. In one example embodiment, the receive-side and delay-spread multiple-input, multi-output (MIMO) data is used (i.e. the transmit-side data is not used).

The output indicative of presence or activity may, for example, be generated using machine learning tools.

The machine learning model may be further trained based on noise subspace eigenvectors and/or determined noise subspace extents. Alternatively, or in addition, the output indicative of presence or activity within the defined space may be further based on noise subspace eigenvectors and/or determined noise subspace extents.

Some embodiments include means for generating signal subspace differential unitarity measures using at least the signal subspace eigenvectors (such as the receive-side and delay-spread eigenvectors, although in principle one or more of the receive-side, transmit-side and delay spread eigenvectors could be used), wherein generating signal subspace differential unitarity measures comprises generating an indication of changes in unitary of the eigenbases and previous corresponding eigenbases of the signal subspace. Generating the output indicative of presence or activity based on at least the signal subspace eigenvectors may comprise generating the output dependent on the signal subspace differential unitarity measures. Alternatively, or in addition, training the machine learning model for generating the output indicative of presence or activity within a defined physical space may further comprise training the machine learning module using the determined signal subspace differential unitarity measures.

Some embodiments may further comprise means for extracting noise subspace eigenvectors (such as the receive-side and delay-spread eigenvectors, although in principle one or more of the receive-side, transmit-side and delay spread eigenvectors could be used) from the eigen-decomposed correlation matrices at each time instance for a determined noise subspace. The means for determining the signal subspace by distinguishing between a signal subspace and a noise subspace may also determine the noise subspace.

Some embodiments may further comprise means for generating noise subspace differential unitarity measures using at least some of the noise subspace eigenvectors (such as the receive-side and delay-spread eigenvectors, although in principle one or more of the receive-side, transmit-side and delay spread eigenvectors could be used) of the noise subspace, wherein generating noise subspace differential unitarity measures comprises generating an indication of changes in unitary of the eigenbases and previous corresponding eigenbases of the noise subspace. Generating the output indicative of presence or activity may further comprises generating the output dependent on the noise subspace differential unitarity measures. Alternatively, or in addition, training the machine learning model for generating the output indicative of presence or activity within a defined physical space may further comprise training the machine learning module using the determined noise subspace differential unitarity measures.

Generating the output indicative of presence or activity may include generating an indication of a number of humans and/or an indication of activity level of humans within the defined space.

The means for determining a signal subspace extent may comprise using a mean-squared error analysis to distinguish between the signal subspace and the noise subspace at the respective time instant. By way of example, the mean-squared error analysis may search for a subspaces boundary yielding an objective distortion. For example, eigenvectors contributing less to the fidelity of covariance reconstruction may fall within the noise subspace. Conversely, eigenvectors impacting the fidelity of the reconstruction more pronouncedly may fall within the signal subspace. The MSE-guided search may be configured to find the subspace boundary that satisfies a desired distortion level in the MSE sense (e.g. -6dB or -12dB).

The means may comprise: at least one processor; and at least one memory including computer program code, the at least one memory and the computer program code configured, with the at least one processor, to cause the performance of the apparatus.

In a second aspect, this specification describes a method comprising: generating (for example, by tensor unfolding) statistical channel correlation matrices at each of a plurality of time instances from a plurality of multi-dimensional arrays or tensors, wherein each of the plurality of arrays or tensors describes a channel impulse or frequency response of a multiple-input, multi-output wireless transmission system at a respective time instance; eigen-decomposing said correlation matrices; determining a signal subspace extent at each time instance by distinguishing between a signal subspace and a noise subspace; extracting eigenvectors (such as receive-side and delay-spread eigenvectors - in principle, one or more of the receive-side, transmit-side and delay-spread eigenvectors could be used) from the eigen-decomposed correlation matrices at each time instance for at least the determined signal subspace; and training a machine learning model for generating an output indicative of presence or activity within a defined physical space using at least the determined signal subspace extents and the signal subspace eigenvectors and/or generating an output indicative of presence or activity within a defined physical space based on at least the determined signal subspace extents and said signal subspace eigenvectors.

The output indicative of presence or activity may, for example, be generated using machine learning tools.

The machine learning model may be further trained based on noise subspace eigenvectors and/or determined noise subspace extents. Alternatively, or in addition, the output indicative of presence or activity within the defined space may be further based on noise subspace eigenvectors and/or determined noise subspace extents.

Generating the output indicative of presence or activity based on at least the signal subspace eigenvectors may comprise generating the output dependent on signal subspace differential unitarity measures. Alternatively, or in addition, training the machine learning model for generating the output indicative of presence or activity within a defined physical space may further comprise training the machine learning module using signal subspace differential unitarity measures.

Generating the output indicative of presence or activity may include generating an indication of a number of humans and/or an indication of activity level of humans within the defined space.

The means for determining a signal subspace extent may comprise using a mean-squared error analysis to distinguish between the signal subspace and the noise subspace at the respective time instant.

In a third aspect, this specification describes an apparatus configured to perform any method as described with reference to the second aspect.

In a fourth aspect, this specification describes computer-readable instructions which, when executed by computing apparatus, cause the computing apparatus to perform any method as described with reference to the second aspect.

In a fifth aspect, this specification describes a computer program comprising instructions for causing an apparatus to perform at least the following: generate statistical channel correlation matrices at each of a plurality of time instances from a plurality of multi-dimensional arrays or tensors, wherein each of the plurality of arrays or tensors describes a channel impulse or frequency response of a multiple-input, multi-output wireless transmission system at a respective time instance; eigen-decompose said correlation matrices; determine a signal subspace extent at each time instance by distinguishing between a signal subspace and a noise subspace; extract eigenvectors from the eigen-decomposed correlation matrices at each time instance for at least the determined signal subspace; and train a machine learning model for generating an output indicative of presence or activity within a defined physical space using at least the determined signal subspace extents and the signal subspace eigenvectors and/or generate an output indicative of presence or activity within a defined physical space based on at least the determined signal subspace extents and said signal subspace eigenvectors.

In a sixth aspect, this specification describes a computer-readable medium (such as a non-transitory computer readable medium) comprising program instructions stored thereon for performing at least the following: generating statistical channel correlation matrices at each of a plurality of time instances from a plurality of multi-dimensional arrays or tensors, wherein each of the plurality of arrays or tensors describes a channel impulse or frequency response of a multiple-input, multi-output wireless transmission system at a respective time instance; eigen-decomposing said correlation matrices; determining a signal subspace extent at each time instance by distinguishing between a signal subspace and a noise subspace; extracting eigenvectors from the eigen-decomposed correlation matrices at each time instance for at least the determined signal subspace; and training a machine learning model for generating an output indicative of presence or activity within a defined physical space using at least the determined signal subspace extents and the signal subspace eigenvectors and/or generating an output indicative of presence or activity within a defined physical space based on at least the determined signal subspace extents and said signal subspace eigenvectors.

### BRIEF DESCRIPTION OF THE DRAWINGS

Example embodiments will now be described, by way of non-limiting example, with reference to the following schematic drawings, in which:
FIG. 1 is a block diagram of an example wireless communication system;
FIG.2 is a flow chart showing an algorithm in accordance with an example embodiment;
FIG. 3 shows instantaneous subspace signal and noise boundaries at different time points in accordance with an example embodiment;
FIG. 4 is a plot showing fractional energy evaluation in accordance with an example embodiment;
FIGS 5A and 5B shows subspace boundaries at -6dB and -12dB reconstruction objectives respectively, in accordance with an example embodiment;
FIG. 6 is a block diagram of a system in accordance with an example embodiment;
FIG. 7 is a flow chart showing an algorithm in accordance with an example embodiment;
FIGS. 8A, 8B and 8C show further details of the system of FIG. 6;
FIGS. 9 and 10 are timelines demonstrating aspects of example embodiments;
FIG. 11 is a block diagram of components of a system in accordance with an exemplary embodiment; and
FIGS. 12A and 12B show tangible media, respectively a removable non-volatile memory unit and a compact disc (CD) storing computer-readable code which when run by a computer perform operations according to embodiments.

### DETAILED DESCRIPTION

In the description, like reference numerals relate to like elements throughout.

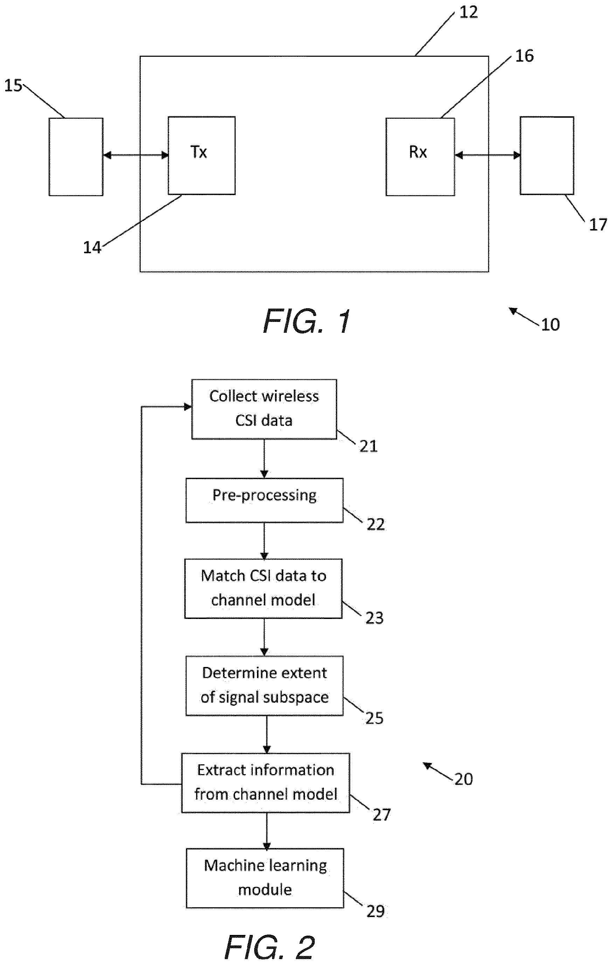

FIG. 1 is a block diagram of an example wireless communication system, indicated generally by the reference numeral 10, in which example embodiments described below may be implemented. The system 10 includes a physical space, indicated generally by the reference numeral 12, within which one or more human occupants may be present. The space 12 may, for example, be a room within a building.

The system 10 includes a multiple-input multiple-output (MIMO) transmitter 14 and a MIMO receiver 16 within the space 12. The MIMO transmitter 14 is connected to a MIMO transmitter controller 15; similarly, the MIMO receiver 16 is connected to a MIMO receiver controller 17.

At least some of the example embodiments herein seek to make use of the structured MIMO channel model in order to extract metrics, such as metrics indicative of human presence or activity (for example, the presence of one or more humans within the space 12 of the system 10 described above). It should be noted, however, that the structured MIMO channel model embodiments are not essential to all embodiments. For example, dynamic subspace extent tracking can be used in systems that do not necessarily split MIMO behaviour in the receive-side, transmit-side and across the delay-spread.

The propagation of radio waves in a physical environment is governed by four phenomena: free-space pathloss, reflection, diffraction, and scattering. Sacrificing preciseness in favour of brevity, it is customary in the literature to lump as 'scatterers' any object that reflects, diffracts and/or scatters radio energy.

In an environment, the exact number of scatterers, their position, and electromagnetic properties at a given frequency band determine fully the conditions of wireless propagation. Given infinite computational power, electromagnetic-environmental properties can be captured in a verbose model in order to solve Maxwell equations at each receiver antenna. Such physical medium description is one extreme way to capture the nuances of the physicality of the environment.

The aim of the structured MIMO model described herein is to capture the correlation in space, time, and delay-spread (i.e. frequency-selectivity) within a MIMO channel snapshot (i.e. tensor). The second-order statistics of MIMO channels (i.e. multidimensional covariances) are described as higher-order tensors. The eigendecomposition of these MIMO tensors distils the multidimensional channel correlations into vector components. These components can be thought of as link-end excitations of the MIMO channel, and as such wholly encapsulate wireless operational conditions.

By considering MIMO channel second-order statistics (i.e. joint correlations rather than absolute-sense SISO channel dynamics), a differential view of the channel ensemble can be obtained which lends itself to a channel tracking formulation that is minimally dependent on the environment-specific radio properties. Such formulation allows for tracking of the channel dynamics arising from changes in the generative subspace (i.e. eigenmodes) while de-emphasising those shaped by the environment. Mathematical modelling inaccuracies aside, subspace tracking can therefore be viewed as an environment-invariant method for inferring human-induced channel variabilities. In this way, human presence or activity can be inferred.

It should also be noted that the use of existing wireless communications signals makes the concepts described herein backward compatible in many circumstances.

Wireless channel state information (CSI) has emerged as a plausible modality for sensing different activities (e.g. human presence or movement) as a function of modulations in the wireless signal that travels between wireless devices (such as the transmitter 14 and the receiver 16 of the system 10 described above). It has, however, proved to be difficult to sustain sensing performance beyond experimental conditions.

FIG. 2 is a flow chart showing an algorithm, indicated generally by the reference numeral 20, in accordance with an example embodiment.

The algorithm 20 starts at operation 21 where data related to a wireless network are obtained or collected. Next, at operation 22, pre-processing of the obtained data may be carried out. As described in detail below, the wireless data may be the relevant channel state information (CSI) data and may be generated at each of a plurality of time instances from a plurality of multi-dimensional arrays or tensors. The pre-processing operation 22 may take many forms, and may be as simple as removing a DC level before processing; in some embodiments, pre-processing may be omitted.

Next, at operation 23, the wireless data are matched with the relevant MIMO structured channel model. As described in detail below, this operation is used to compute the eigenbases for the channel based on the received data by eigen-decomposing correlation matrices that describe the channel state information at the respective time instance. As described in detail below, the channel eigenbases in space (receive and transmit dimensions) and in delay spread may be given by the following formulae respectively: ${R}_{Rx} = {U}_{Rx} {Δ}_{Rx} {U}_{Rx}^{H}$ ${R}_{Tx} = {U}_{Tx} {Δ}_{Rx} {U}_{Tx}^{H}$ ${R}_{Dy} = {U}_{Dy} {Δ}_{Dy} {U}_{Dy}^{H}$

(It should be noted that although the delayspread is referred to above by the symbol Dy, the term Del is sometimes used herein and in the art.)

At operation 25, the extent of the signal subspace of the channel at the relevant time is determined. The operation 25 is implemented by distinguishing between a signal subspace and a noise subspace of the channel. An example method for determining the extent of the signal space is described in detail below.

At operation 27, information is extracted from the channel model generated in operation 23 above and/or the signal and/or noise subspace extents (determined in operation 25). As described further below, the information extracted from the channel model comprises eigenvectors from eigen-decomposed correlation matrices for determined signal subspace (and, in some embodiments, for the determined noise subspace). The information extracted at operation 27 and the signal subspace extent determined in operation 25 is then provided to a machine learning module (see operation 29 described below). The machine learning model may be trained for generating an output indicative of presence or activity within a defined physical space (e.g. the space 12 described above with reference to FIG.1) using at least determined signal subspace extents and signal subspace eigenvectors

The operations 21 to 27 are repeated at a number of time intervals to provide a series of data to the machine learning module.

At operation 29, the machine learning module is used to make sense of the data output by each instance of the operations 25 and 27. Note that the machine learning module could take many different forms. The machine learning module could be a long short-term memory (LSTM) recurrent neural network capable of extracting patterns embedded in the history of the changes of the eigenbases. Further, it would be possible to implement the methods and systems described herein without using a machine learning module using a fully-modelled approach subject to the required performance-complexity-resource mode of operation.

Thus, the algorithm 20 may be used for training a machine learning model for generating an output indicative of presence or activity (e.g. human presence or activity) within a defined physical space using at least the determined signal subspace extents and the signal subspace eigenvectors. Alternatively, or in addition, the algorithm 20 may be used to detect presence or human activity (e.g human presence or activity) within a defined physical space (e.g. the space 12 described above) based on at least the determined signal subspace extents and said signal subspace eigenvectors, as described further below.

Not all of the operations of the algorithm 20 are essential to all embodiments. As noted above, pre-processing (operation 22) and the use of the structured MIMO channel modelling (in operation 23) is not essential to all embodiments. Furthermore, the use of a machine learning module in generating an output (operation 29) is not essential.

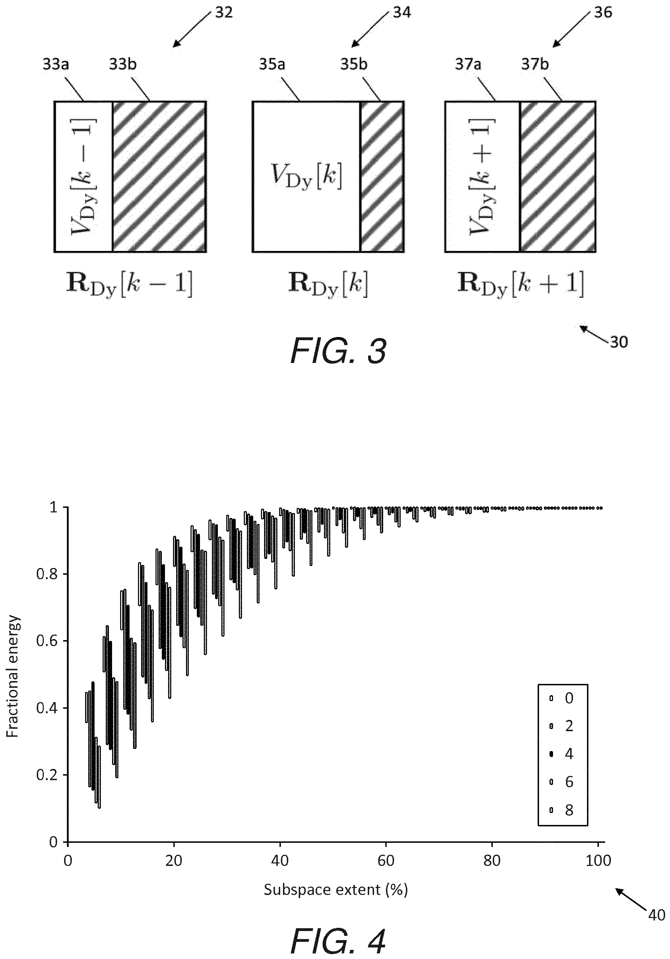

As described above, the operation 25 determines the extent of the signal subspace by distinguishing between the signal subspace and the noise subspace of the channel. FIG. 3 shows instantaneous subspace signal and noise boundaries at different time points (times (k-1), k and (k+1) respectively) in accordance with an example embodiment.

FIG. 3 shows a first signal 32, a second signal 34 and a third signal 36. The first, second and third signals occur at times k-1, k and k+1 respectively.

The first signal 32 comprises a signal subspace 33a and a noise subspace 33b. Similarly, the second signal 34 comprises a signal subspace 35a and a noise subspace 35b and the third signal 36 comprises a signal subspace 37a and a noise subspace 37b.

Each of the eigendecompositions R_{Rx}, R_{Tx} and R_{Dy} described above describes a natural filtration, that is, a succession of growing subspaces ${V}_{0} ⊂ {V}_{1} ⊂ ⋯ ⊂ V = {ℂ}^{N}$ spanned by the first *i* eigenvectors ***u**_{rX,j}*[*k*], where *j* ≤ *i* and *i* = 1,...,*N*. Here *N* is the dimensionality of the chose measurement dimension, i.e. the number of receive (Rx) antennae. We may use the subspace *Vᵢ* as a sufficient statistic for the signal subspace for some *i* < *N.*

For each measurement dimension, we may call the subspace defined here as the transmit-projected instantaneous signal subspace, the receive-projected instantaneous signal subspace and the delay-spread-projected instantaneous signal subspace.

The first signal 32 is the delay-spread eigenvector at time *k* - 1 (i.e. *R_{Dy}*[*k* - 1]) of which the signal subspace 33a is the delay-spread-projected instantaneous signal subspace at time *k* - 1 (i.e. *V_{Dy}*[*k* - 1]). Similarly, the second signal 34 is the delay-spread eigenvector at time *k* (i.e. *R_{Dy}*[*k*]) of which the signal subspace 35a is the delay-spread-projected instantaneous signal subspace at time *k*(*V_{Dy}*[*k*]) and third signal 36 is the delay-spread eigenvector at time *k* + 1 (i.e. *R_{Dy}*[*k* + 1]) of which the signal subspace 37a is the delay-spread-projected instantaneous signal subspace at time k + 1 (*V_{Dy}*[*k* + 1]).

As shown in FIG. 3, the boundary between the signal and noise subspaces changes over time. This boundary (which maybe determined in the operation 25 described above) provides some information about the channel.

FIG. 4 is a plot, indicated generally by the reference numeral 40, showing fractional energy evaluation in accordance with an example embodiment. In particular, the plot 40 shows the variability in the fractional energy subspace Eₛ within the signal subspace extent and across movement scenarios (as denoted by the vertical scatter points). The variability increases towards the lower end of the subspace extent, reflecting the poor signal-to-noise ratio contributed. Further, the variability increases with the number of moving people (i.e. fractional energy is more diffused in higher occupancy classes). Nevertheless, it has proved to be difficult to make use of fractional energy information alone to provide reliable presence or activity indications.

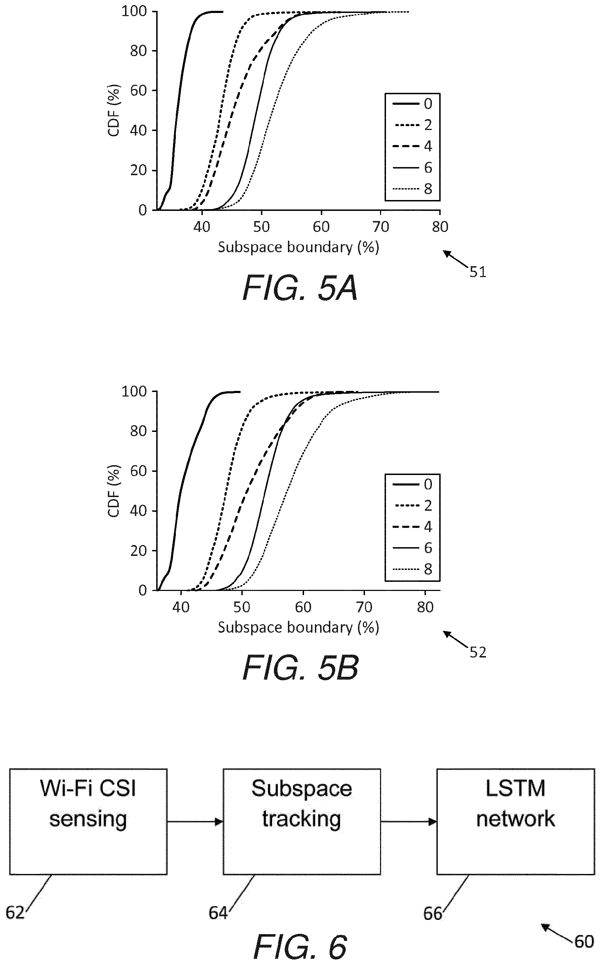

FIGS 5A and 5B shows cumulative distribution functions showing subspace boundaries at -6dB and -12dB reconstruction objectives respectively, indicated generally by the reference numerals 51 and 52, in accordance with an example embodiment. The subspace boundaries 51 and 52 are generated using a mean-squared error (MSE) based search procedure that allows the designation of a portion of the covariance decomposition (i.e. eigenvectors) as the signal subspace and the remainder of the eigenvectors as the noise subspace.

For example, let *R* = *UΛU^{H}* be the eigendecomposition of the channel correlation matrix. Define ${R}_{i}^{′} = U {Λ}_{i}^{′} {U}^{H}$ as a reconstructed channel correlation matrix whose modified diagonal eigenvalue matrix ${Λ}_{i}^{′}$ nullifies all diagonal entries beyond index *i*, i.e. ${Λ}_{i}^{′} = \left[\begin{matrix}⋱ & 0 & 0 & … & … & 0 \\ 0 & {λ}_{i - 1} & 0 & 0 & … & 0 \\ 0 & 0 & {λ}_{i} & ⋱ & & ⋮ \\ ⋮ & & ⋱ & 0 & ⋱ & ⋮ \\ ⋮ & & & ⋱ & ⋱ & ⋮ \\ 0 & 0 & … & … & … & 0\end{matrix}\right]$

The reconstruction error matrix ${R}^{ε} = R - {R}_{i}^{′} = \left[{r}_{ij}^{ε}\right] .$ The reconstruction MSE error can then be described as $MSE = \frac{1}{N} {\sum }_{I , j} {\left({r}_{ij}^{ε}\right)}^{2}$ where *N* is the dimension of the channel correlation matrix.

The signal and noise subspace designation is conducted instantaneously at a plurality of time instances k. This procedure enables the extraction of maximal information from the signal subspace of the wireless channel. Moreover, changes in the boundary between the signal and noise subspaces are related to activity within the relevant physical space (such as the space 12 described above).

The MSE algorithm involves searching for the subspaces boundary yielding an objective MSE distortion. Eigenvectors contributing less to the fidelity of covariance reconstruction will fall within the noise subspace. Conversely, eigenvectors impacting the fidelity of reconstruction more pronouncedly will fall within the signal subspace. The MSE-guided search finds the subspaces boundary that satisfies a desired distortion level in the MSE sense (e.g. -6dB or -12bB, as described further below).

FIG. 5B shows the result of the MSE search procedure on the demarcation of the boundary between the signal and noise subspaces. FIG. 5B shows that dynamic stresses on the wireless channel would result in equivalent shrinkage or expansion of the signal subspace as needed to satisfy the target reconstruction distortion level (-12dB in the example of FIG. 5B). FIG. 5A shows the result of the MSE search procedure when the target reconstruction distortion level is doubled to -6dB. FIGS. 5A and 5B show similar subspace dynamic behaviour. Thus, the subspaces boundary demarcation is insensitive to the chosen MSE level.

Environmental factors that might affect the wireless channel might include the presence of a tree inside the room 12 in the system 10 described above, or the presence of a metal filing cabinet within the space 12. By making use of eigenbases and differential unitarity features (as described further below), the algorithm 20 may be able to identify data that are less prone to such environmental factors.

The structured MIMO channel model referred to in operation 23 generates three orthonormal bases for the channel tensor: receiver-side, transmitter-side, and across the delayspread.

To this end, let **H**₍ₙ₎ be the nth matrix unfolding of tensor H. The three tensor unfoldings H₍₁₎, **H**₍₂₎ and **H**₍₃₎ describe the channel behaviour in SIMO (single-input, multiple output), MISO (multiple-input, single output), and delay-spread, respectively. ${H}_{\left(1\right)} = \left[\begin{matrix}{h}_{111} & ⋯ & {h}_{11 D} & {h}_{121} & ⋯ & {h}_{12 D} & ⋯ & {h}_{1 {N}_{Tx} 1} & ⋯ & {h}_{1 {N}_{Tx} D} \\ ⋮ & ⋱ & ⋮ & ⋮ & ⋱ & ⋮ & & ⋮ & ⋱ & ⋮ \\ {h}_{{N}_{Rx} 11} & ⋯ & {h}_{{N}_{Rx} 1 D} & {h}_{{N}_{Rx} 2 D} & ⋯ & {h}_{{N}_{Rx} 2 D} & ⋯ & {h}_{{N}_{Rx} {N}_{Tx} 1} & ⋯ & {h}_{{N}_{Rx} {N}_{Tx} 1 D}\end{matrix}\right]$ ${H}_{\left(2\right)} = \left[\begin{matrix}{h}_{111} & ⋯ & {h}_{{N}_{Rx} 11} & {h}_{112} & ⋯ & {h}_{{N}_{Rx} 12} & ⋯ & {h}_{11 D} & ⋯ & {h}_{{N}_{Rx} 1 D} \\ ⋮ & ⋱ & ⋮ & ⋮ & ⋱ & ⋮ & & ⋮ & ⋱ & ⋮ \\ {h}_{1 {N}_{Tx} 1} & ⋯ & {h}_{{N}_{Rx} {N}_{Tx} 1} & {h}_{1 {N}_{{T}_{x}} 2} & ⋯ & {h}_{{N}_{Rx} {N}_{Tx} 2} & ⋯ & {h}_{1 {N}_{Tx} D} & ⋯ & {h}_{{N}_{Rx} {N}_{Tx} D}\end{matrix}\right]$ ${H}_{\left(3\right)} = \left[\begin{matrix}{h}_{111} & ⋯ & {h}_{1 {N}_{Tx} 1} & {h}_{211} & ⋯ & {h}_{2 {N}_{Tx} 1} & ⋯ & {h}_{{N}_{Rx} 11} & ⋯ & {h}_{{N}_{Rx} {N}_{Tx} 1} \\ ⋮ & ⋱ & ⋮ & ⋮ & ⋱ & ⋮ & & ⋮ & ⋱ & ⋮ \\ {h}_{11 D} & ⋯ & {h}_{1 {N}_{Tx} D} & {h}_{21 D} & ⋯ & {h}_{2 {N}_{Tx} D} & ⋯ & {h}_{{N}_{Rx} 1 D} & ⋯ & {h}_{{N}_{Rx} {N}_{Tx} D}\end{matrix}\right]$

The receive-side correlation matrix ${R}_{Rx} ∈ {ℂ}^{{N}_{Rx} \times {N}_{Rx}}$ is the computed as ${R}_{Rx} = E \left\{{H}_{\left(1\right)}{H}_{\left(1\right)}^{H}\right\}$

Similarly, the transmit-side correlation matrix ${R}_{Tx} ∈ {ℂ}^{{N}_{Tx} \times {N}_{Tx}}$ is ${R}_{Tx} = E \left\{{H}_{\left(2\right)}{H}_{\left(2\right)}^{H}\right\}$

And the delayspread correlation matrix ${R}_{Dy} ∈ {ℂ}^{D \times D}$ is ${R}_{Dy} = E \left\{{H}_{\left(3\right)}{H}_{\left(3\right)}^{H}\right\}$

Eigendecomposition is then applied to the three one-sided correlation matrices in order to extract the channel eigenbases in space (receive and transmit dimensions) and in delayspread according to: ${R}_{Rx} = {\sum }_{i = 1}^{{N}_{Rx}} {λ}_{Rx , i} {u}_{Rx , i} {u}_{Rx , i}^{H} = {U}_{Rx} {Λ}_{Rx} {U}_{Rx}^{H}$ ${R}_{Tx} = {\sum }_{j = 1}^{{N}_{Tx}} {λ}_{Tx , j} {u}_{Tx , j} {u}_{Tx , j}^{H} = {U}_{Tx} {Λ}_{Tx} {U}_{Tx}^{H}$ ${R}_{Dy} = {\sum }_{k = 1}^{D} {λ}_{Dy , k} {u}_{Dy , k} {u}_{Dy , k}^{H} = {U}_{Dy} {Λ}_{Dy} {U}_{Dy}^{H}$

It should be noted that the terms "delayspread" and "delayline" can both be used to describe the relevant eigendecomposition dimension. These terms are used interchangeably in this document. It should also be noted that in embodiments operating in the frequency domain (rather than the time domain generally described in the example embodiments), the delayspread would be referred to as frequency selectivity, by virtue of duality.

As described in detail below, in some embodiments we track one or more of the three eigenbases U_{Rx}, U_{Tx} and U_{Dy}. More specifically, we track changes in the eigenbases. (In one example embodiment, the receive-side and delay-spread eigenvectors U_{Rx}, and U_{Dy} are considered.)

The inventors have observed that the eigendecomposition of the MIMO channel eigenmodes will produce eigenvectors that are by construction unitary, i.e.: ${{u}^{H}}_{x , i} {u}_{x , i} = 1$

Therefore, in order to track the changes exerted on the channel as a result of human (or other) presence or activity, we monitor the successive changes in the unitarity of the eigenbases (referred to herein as 'differential unitarity' - see operation 74 of the algorithm 70 described below).

In a static environment, we expect the differential unitarity to be near perfect (i.e. very close to 1) owing to the unchanging statistics of the MIMO channel. Depending on the severity of statistical channel changes across two successive periods, a mismatch in the decomposed bases will translate into a deviation in how unitary their eigenvectors will remain differentially from one period to the next. If we denote by u_{Rx,i}[t] the ith receive eigenvector at time t, then the differential unitarity û_{Rx,i}[t] between time t and t-1 is formulated by: ${û}_{Rx , i} \left[t\right] = {u}_{Rx , i}^{H} \left[t\right] {u}_{Rx , i} \left[t-1\right]$

Similar formulation is extended to delayspread and transmit eigenbases: ${û}_{Del , i} \left[t\right] = {u}_{Del , i}^{H} \left[t\right] {u}_{Del , i} \left[t-1\right]$ ${û}_{Tx , i} \left[t\right] = {u}_{Tx , i}^{H} \left[t\right] {u}_{Tx , i} \left[t-1\right]$

It has been found that human presence introduces dynamic channel changes that manifest themselves in significant dispersion in the differential unitarity measures, both in magnitude and phase.

It can be shown that the synthesis equation which allows for the generation of channel tensors conforming to the measured spatio-temporal statistics is given by 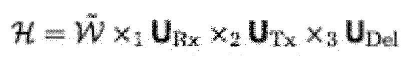 where *W̅* is the coupling coefficient tensor, and U_{Rx}, U_{Tx} and U_{Del} (or U_{Dy}) are the decomposed eigenbases.

Noting the structure of the channel synthesis equation above, the coupling coefficients will 'combine' the decomposed eigenmodes as to realise a MIMO channel tensor instance. In spite of the coupling coefficients being indicative of channel fading and thus by extension being potentially also indicative of human-induced channel variations, the coupling coefficient is heavily 'statistically coloured'by the specific physicality of the environment (such as the tree and the metal filing cabinet referred to above). As such, in many embodiments, we choose to exclude the coupling coefficients of the MIMO Structured model from inference altogether, and hence our proposed environment-invariant differential unitarity tracking.

FIG. 6 is a block diagram of a system, indicated generally by the reference numeral 60, in accordance with an example embodiment. The system 60 comprises a CSI sensing module 62, a subspace tracking module 64 and an LSTM network 66.

The CSI sensing module 62 collects wireless CSI data and matches the CSI data to a channel mode, thereby implementing operations 21 to 23 of the algorithm 20 described above.

The subspace tracking module 64 determines the extent of the signal subspace and extracts information from the channel model regarding at least the signal subspace, thereby implementing the operations 25 and 27 of the algorithm 20.

The LSTM network 66 is an example implementation of the machine learning module 29 referred to above.

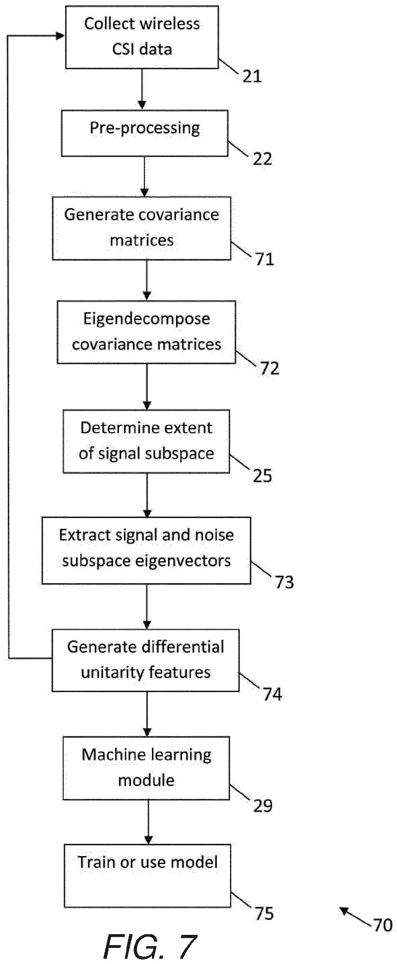

FIG. 7 is a flow chart showing an algorithm, indicated generally by the reference numeral 70, in accordance with an example embodiment.

The algorithm 70 starts at operation 21 where data related to a wireless network are obtained or collected. Next, at operation 22, pre-processing of the obtained data may be carried out. The operations 21 and 22 are equivalent to the operations 21 and 22 described above with reference to the algorithm 20.

Next, at operation 71, covariance matrices are generated and, at operation 72, the covariance matrices are eigendecomposed. Thus, the operations 71 and 72 implement the operation 23 described above in which the wireless data obtained or collected in operation 21 are matched with the relevant MIMO structured channel model. Thus, in the operation 72, eigenbases are computed for the channel based on the received data by eigen-decomposing correlation matrices that describe the channel state information at the respective time instance.

At operation 25, the extent of the signal subspace of the channel at the relevant time is determined. The operation 25 is implemented by distinguishing between a signal subspace and a noise subspace of the channel and is equivalent to the operation 25 of the algorithm 20.

At operation 73, the correlation matrices are eigen-decomposed. The signal subspace eigenvectors are extracted for the determined signal subspace. Optionally, the noise subspace eigenvectors are extracted for the determined noise subspace. At operation 74, differential unitarity features are extracted for the signal subspace (and optionally for the noise subspace). The operations 73 and 74 are therefore an example implementation of the operation 27 described above.

The operations 21, 22, 71, 72, 25, 73 and 74 are repeated at a number of time intervals to provide a series of data to the machine learning module.

At operation 29, the machine learning module is used to make sense of the data output by each instance of the operations 25, 73 and 74. Thus, the operation 29 is equivalent to the operation 29 of the algorithm 20. The machine learning module is either trained or used at operation 75.

Thus, the algorithm 70 may be used for training a machine learning model for generating an output indicative of presence or activity (e.g. human presence or activity) within a defined physical space using at least the determined signal substance extents and the signal subspace eigenvectors. Alternatively, or in addition, the algorithm 70 may be used to detect presence or human activity (e.g human presence or activity) within a defined physical space (e.g. the space 12 described above) based on at least the determined signal subspace extents and said signal subspace eigenvectors, as described further below.

The algorithms 20 and 70 are generally described with reference to human presence or activity; this is not essential to all embodiments. For example, the presence or activity of animals (such as farm animals) could be detected. Moreover, other activity, such as the operation of a rotary fan indoors, may also be inferred.

The algorithms 20 and 70 are generally described with reference to the signal subspace. It should be noted that the noise subspace may also be used (in addition to, or instead of, the signal subspace). For example, the noise subspace may be useful for extracting information relating to the presence or activity of users within a relevant physical space.

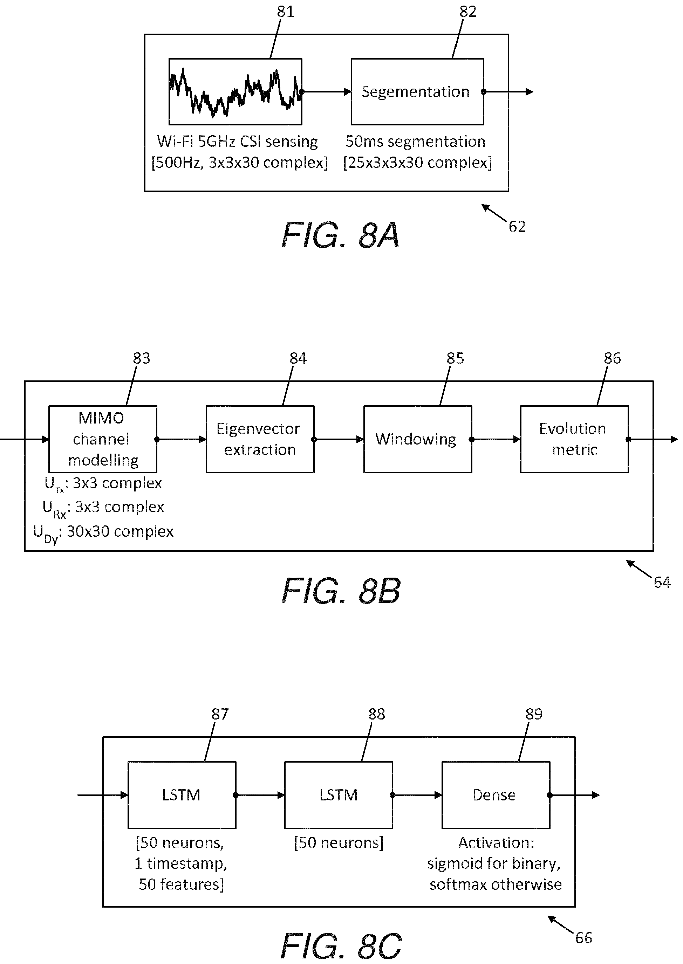

FIGS. 8A, 8B and 8C show details of example implementation of the CSI sensing module 62, the subspace tracking module 64 and the LSTM network 66 of the system 60 described above.

As shown in FIG. 8A, the CSI sensing module 62 includes a captured wireless signal 81 that is provided to a segmentation module 82. By way of example only, the wireless signal 81 is a 500Hz, 3x3x30 complex signal. For example, the signal may be a 3x3 MIMO signal that forms part of the 802.11n standard.

As shown in FIG. 8B, the subspace tracking module 64 includes a MIMO channel modelling module 83, an eigenvector extraction module 84, a windowing module 85 and an evolution metric module 86. The MIMO channel modelling module 83 generates the eigenbases U_{Rx}, U_{Tx} and U_{Dy}. The evolution metric module 86 may be used to generate differential unitarity information.

As shown in FIG. 8C, the LSTM network 66 includes a first LSTM module 87, a second LSTM module 88 and a dense module 89. Of course, the LSTM network 66 could take many different forms.

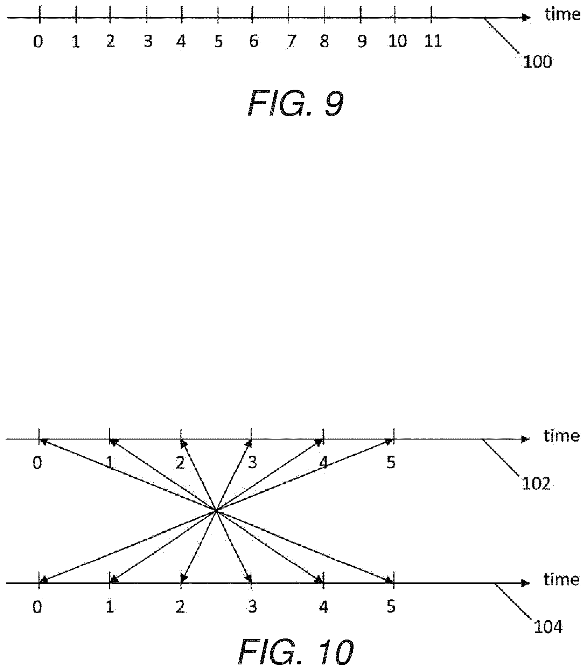

FIG. 9 shows a timeline 100, including a number of time points (labelled 0 to 11). In the example embodiments described above, eigendecomposition of the channel statistics is conducted at each of the time points shown in Figure 9.

The differential unitarity in the embodiments described above is dependent on the values of successive eigenbases. However, this is not essential to all example embodiments. For example, the differential unitarity could be based on more distant eigenbases.

FIG. 10 shows a first timeline 102 and a second timeline 104 similar to the timeline 100 described above. The timelines 102 and 104 are identical and show time periods t=0 to t=5.

In the arrangement shown in FIG. 10, the data relating to the six time periods is buffered so that comparison can be made across a wider time window. Thus, for example, the eigebases at t=0 can be compared with those at t=5, the eigenbases at t=1 can be compared with the eigenbases at t=4 and the eigenbases at t=2 can be compared with the eigenbases at t=3. Such an arrangement may enable the changes in channel statistics to be viewed across a wider time period and may enable the rate of change of eigenvector unitarity to be determined.

The concept of differential unitarity described herein is a measure of how similar two eigenvectors, derived from two different snapshots of the channel state information, are. As described above, the eigenvectors compared to derive the differential unitarity indication do not need to be adjacent.

The timelines of described above with reference to FIGS. 9 and 10 are provided by way of example only. It will be readily apparent to the skilled person that alternative combinations may be provided in order for different data points to be compared.

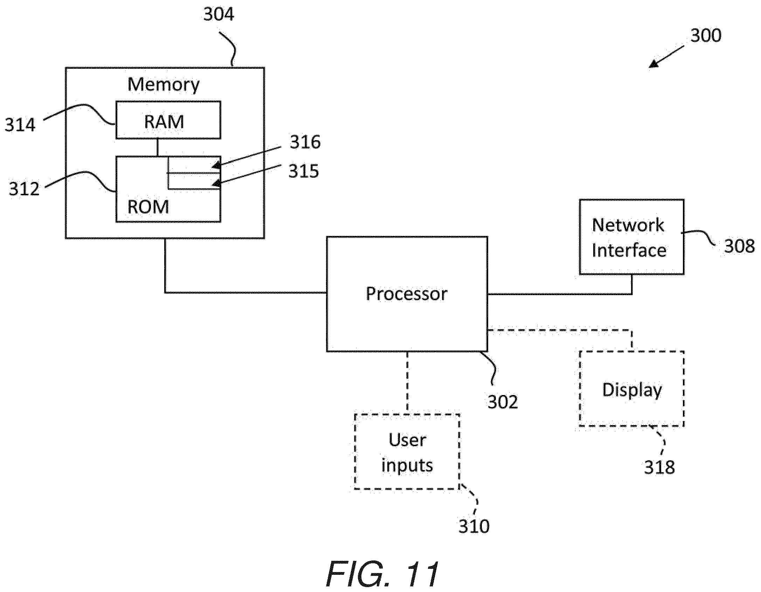

For completeness, Figure 11 is a schematic diagram of components of one or more of the example embodiments described previously, which hereafter are referred to generically as processing systems 300. A processing system 300 may have a processor 302, a memory 304 closely coupled to the processor and comprised of a RAM 314 and ROM 312, and, optionally, user input 310 and a display 318. The processing system 300 may comprise one or more network/apparatus interfaces 308 for connection to a network/apparatus, e.g. a modem which maybe wired or wireless. Interface 308 may also operate as a connection to other apparatus such as device/apparatus which is not network side apparatus. Thus direct connection between devices/apparatus without network participation is possible.

The processor 302 is connected to each of the other components in order to control operation thereof.

The memory 304 may comprise a non-volatile memory, such as a hard disk drive (HDD) or a solid state drive (SSD). The ROM 312 of the memory 314 stores, amongst other things, an operating system 315 and may store software applications 316. The RAM 314 of the memory 304 is used by the processor 302 for the temporary storage of data. The operating system 315 may contain code which, when executed by the processor implements aspects of the algorithms 20 and 70 described above. Note that in the case of small device/ apparatus the memory can be most suitable for small size usage i.e. not always hard disk drive (HDD) or solid state drive (SSD) is used.

The processor 302 may take any suitable form. For instance, it maybe a microcontroller, a plurality of microcontrollers, a processor, or a plurality of processors.

The processing system 300 may be a standalone computer, a server, a console, or a network thereof. The processing system 300 and needed structural parts may be all inside device/apparatus such as IoT device/apparatus i.e. embedded to very small size

In some example embodiments, the processing system 300 may also be associated with external software applications. These may be applications stored on a remote server device/ apparatus and may run partly or exclusively on the remote server device/apparatus. These applications maybe termed cloud-hosted applications. The processing system 300 may be in communication with the remote server device/ apparatus in order to utilize the software application stored there.

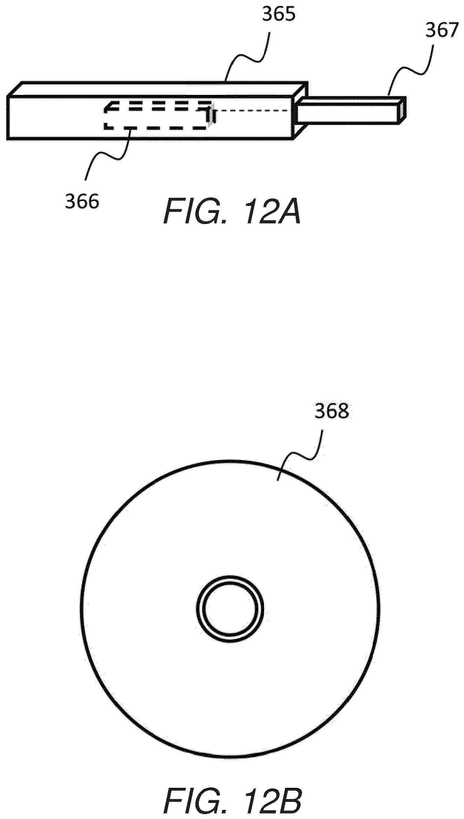

Figures 12A and 12B show tangible media, respectively a removable non-volatile memory unit 365 and a compact disc (CD) 368, storing computer-readable code which when run by a computer may perform methods according to example embodiments described above. The removable memory unit 365 may be a memory stick, e.g. a USB memory stick, having internal memory 366 storing the computer-readable code. The memory 366 may be accessed by a computer system via a connector 367. The CD 368 may be a CD-ROM or a DVD or similar. Other forms of tangible storage media may be used. Tangible media can be any device/ apparatus capable of storing data/information which data/information can be exchanged between devices/ apparatus/ network.

Embodiments of the present invention may be implemented in software, hardware, application logic or a combination of software, hardware and application logic. The software, application logic and/or hardware may reside on memory, or any computer media. In an example embodiment, the application logic, software or an instruction set is maintained on any one of various conventional computer-readable media. In the context of this document, a "memory" or "computer-readable medium" may be any non-transitory media or means that can contain, store, communicate, propagate or transport the instructions for use by or in connection with an instruction execution system, apparatus, or device, such as a computer.

Reference to, where relevant, "computer-readable storage medium", "computer program product", "tangibly embodied computer program" etc., or a "processor" or "processing circuitry" etc. should be understood to encompass not only computers having differing architectures such as single/multi-processor architectures and sequencers/parallel architectures, but also specialised circuits such as field programmable gate arrays FPGA, application specify circuits ASIC, signal processing devices/ apparatus and other devices/ apparatus. References to computer program, instructions, code etc. should be understood to express software for a programmable processor firmware such as the programmable content of a hardware device/ apparatus as instructions for a processor or configured or configuration settings for a fixed function device/ apparatus, gate array, programmable logic device/ apparatus, etc.

As used in this application, the term "circuitry" refers to all of the following: (a) hardware-only circuit implementations (such as implementations in only analogue and/or digital circuitry) and (b) to combinations of circuits and software (and/or firmware), such as (as applicable): (i) to a combination of processor(s) or (ii) to portions of processor(s)/ software (including digital signal processor(s)), software, and memory(ies) that work together to cause an apparatus, such as a server, to perform various functions) and (c) to circuits, such as a microprocessor(s) or a portion of a microprocessor(s), that require software or firmware for operation, even if the software or firmware is not physically present.

If desired, the different functions discussed herein may be performed in a different order and/or concurrently with each other. Furthermore, if desired, one or more of the above-described functions may be optional or may be combined. Similarly, it will also be appreciated that the flow diagrams of Figures 2 and 7 are examples only and that various operations depicted therein maybe omitted, reordered and/or combined. It will be appreciated that the above described example embodiments are purely illustrative and are not limiting on the scope of the invention. Other variations and modifications will be apparent to persons skilled in the art upon reading the present specification.

It is also noted herein that while the above describes various examples, these descriptions should not be viewed in a limiting sense. Rather, there are several variations and modifications which may be made without departing from the scope of the present invention as defined in the appended claims.

## Claims

1. An apparatus comprising:
means for generating statistical channel correlation matrices at each of a plurality of time instances from a plurality of multi-dimensional arrays or tensors, wherein each of the plurality of arrays or tensors describes a channel impulse or frequency response of a multiple-input, multi-output wireless transmission system at a respective time instance;
means for eigen-decomposing said correlation matrices;
means for determining a signal subspace extent at each time instance by distinguishing between a signal subspace and a noise subspace;
means for extracting eigenvectors from the eigen-decomposed correlation matrices at each time instance for at least the determined signal subspace;
means for generating signal subspace differential unitarity measures using at least the signal subspace eigenvectors, wherein generating signal subspace differential unitarity measures comprises generating an indication of changes in unitarity of eigenbases with respect to previous corresponding eigenbases consisting of the signal subspace eigenvectors; and
means for training a machine learning model for generating an output indicative of presence or activity within a defined physical space using at least the determined signal subspace extents and the signal subspace eigenvectors and/or means for generating an output indicative of presence or activity within a defined physical space based on at least the determined signal subspace extents and said signal subspace eigenvectors;
wherein: generating the output indicative of presence or activity based on at least the signal subspace eigenvectors comprises generating the output dependent on the signal subspace differential unitarity measures and/or training the machine learning model for generating the output indicative of presence or activity within a defined physical space further comprises training the machine learning module using the determined signal subspace differential unitarity measures.

2. An apparatus according to claim 1, wherein each of the plurality of arrays or tensors describes a channel impulse or frequency response at one or more of a transmit-side, receive-side and across a delay-spread of a multiple-input, multi-output wireless transmission system at a respective time instance.

3. An apparatus according claim 1 or claim 2, wherein the output indicative of presence or activity is generated using machine learning tools.

4. An apparatus as claimed in any one of claims 1 to 3, wherein:
said machine learning model is further trained based on noise subspace eigenvectors and/or determined noise subspace extents; and/or
the output indicative of presence or activity within the defined space is further based on noise subspace eigenvectors and/or determined noise subspace extents.

5. An apparatus according to any one of the preceding claims, further comprising means for extracting noise subspace eigenvectors from the eigen-decomposed correlation matrices at each time instance for a determined noise subspace.

6. An apparatus according to claim 5, further comprising means for generating noise subspace differential unitarity measures using at least some of the noise subspace eigenvectors of the noise subspace, wherein generating noise subspace differential unitarity measures comprises generating an indication of changes in unitary of the eigenbases and previous corresponding eigenbases of the noise subspace.

7. An apparatus according to claim 6, wherein:
generating the output indicative of presence or activity, further comprises generating the output dependent on the noise subspace differential unitarity measures; and/or
training the machine learning model for generating the output indicative of presence or activity within a defined physical space further comprises training the machine learning module using the determined noise subspace differential unitarity measures.

8. An apparatus according to any one of the preceding claims, wherein generating the output indicative of presence or activity includes generating an indication of a number of humans and/or an indication of activity level of humans within the defined space.

9. An apparatus according to any one of the preceding claims, wherein the means for determining a signal subspace extent comprises using a mean-squared error analysis to distinguish between the signal subspace and the noise subspace at the respective time instant.

10. An apparatus according to claim 9, wherein the mean-squared error analysis searches for a subspaces boundary yielding an objective distortion.

11. An apparatus according to any one of the preceding claims, wherein the means are :
at least one processor; and
at least one memory including computer program code, the computer program code configured to be executed by the at least one processor.

12. A method comprising:
generating statistical channel correlation matrices at each of a plurality of time instances from a plurality of multi-dimensional arrays or tensors, wherein each of the plurality of arrays or tensors describes a channel impulse or frequency response of a multiple-input, multi-output wireless transmission system at a respective time instance;
eigen-decomposing said correlation matrices;
determining a signal subspace extent at each time instance by distinguishing between a signal subspace and a noise subspace;
extracting eigenvectors from the eigen-decomposed correlation matrices at each time instance for at least the determined signal subspace; generating signal subspace differential unitarity measures using at least the signal subspace eigenvectors, wherein generating signal subspace differential unitarity measures comprises generating an indication of changes in unitarity of eigenbases with respect to previous corresponding eigenbases consisting of the signal subspace eigenvectors; and
training a machine learning model for generating an output indicative of presence or activity within a defined physical space using at least the determined signal subspace extents and the signal subspace eigenvectors and/or generating an output indicative of presence or activity within a defined physical space based on at least the determined signal subspace extents and said signal subspace eigenvectors;
wherein: generating the output indicative of presence or activity based on at least the signal subspace eigenvectors comprises generating the output dependent on the signal subspace differential unitarity measures and/or training the machine learning model for generating the output indicative of presence or activity within a defined physical space further comprises training the machine learning module using the determined signal subspace differential unitarity measures.

13. A computer program comprising instructions, which when executed on a computer, causes the computer to perform at least the following:
generate statistical channel correlation matrices at each of a plurality of time instances from a plurality of multi-dimensional arrays or tensors, wherein each of the plurality of arrays or tensors describes a channel impulse or frequency response of a multiple-input, multi-output wireless transmission system at a respective time instance;
eigen-decompose said correlation matrices;
determine a signal subspace extent at each time instance by distinguishing between a signal subspace and a noise subspace;
extract eigenvectors from the eigen-decomposed correlation matrices at each time instance for at least the determined signal subspace; generate signal subspace differential unitarity measures using at least the signal subspace eigenvectors, wherein generating signal subspace differential unitarity measures comprises generating an indication of changes in unitarity of eigenbases with respect to previous corresponding eigenbases consisting of the signal subspace eigenvectors; and
train a machine learning model for generating an output indicative of presence or activity within a defined physical space using at least the determined signal subspace extents and the signal subspace eigenvectors and/or generate an output indicative of presence or activity within a defined physical space based on at least the determined signal subspace extents and said signal subspace eigenvectors;
wherein: generating the output indicative of presence or activity based on at least the signal subspace eigenvectors comprises generating the output dependent on the signal subspace differential unitarity measures and/or training the machine learning model for generating the output indicative of presence or activity within a defined physical space further comprises training the machine learning module using the determined signal subspace differential unitarity measures.

## Patentansprüche

1. Vorrichtung, die Folgendes umfasst:
ein Mittel zum Erzeugen von statistischen Kanalkorrelationsmatrices zu jeder einer Vielzahl von Zeitinstanzen aus einer Vielzahl von mehrdimensionalen Arrays oder Tensoren, wobei jedes bzw. jeder der Vielzahl von Arrays oder Tensoren einen Kanalimpuls oder Frequenzgang eines drahtlosen Multiple-Input-Multi-Output-Übertragungssystems zu einer jeweiligen Zeitinstanz beschreibt;
ein Mittel zum Eigenzerlegen der Korrelationsmatrices;
ein Mittel zum Bestimmen einer Signalunterraumausdehnung zu jeder Zeitinstanz durch Unterscheiden zwischen einem Signalunterraum und einem Rauschunterraum;
ein Mittel zum Extrahieren von Eigenvektoren aus den eigenzerlegten Korrelationsmatrices zu jeder Zeitinstanz mindestens für den bestimmten Signalunterraum;
ein Mittel zum Erzeugen von differenziellen Signalunterraumunitaritätsmaßen mindestens unter Verwendung der Signalunterraumeigenvektoren, wobei das Erzeugen von differenziellen Signalunterraumunitaritätsmaßen das Erzeugen einer Anzeige von Änderungen der Unitarität von Eigenbasen mit Bezug auf vorherige entsprechende Eigenbasen, die aus den Signalunterraumeigenvektoren bestehen, umfasst; und
ein Mittel zum Trainieren eines Maschinenlernmodells zum Erzeugen einer Ausgabe, die eine Anwesenheit oder Aktivität in einem definierten physischen Raum anzeigt, mindestens unter Verwendung der bestimmten Signalunterraumausdehnungen und der Signalunterraumeigenvektoren und/oder ein Mittel zum Erzeugen einer Ausgabe, die eine Anwesenheit oder Aktivität in einem definierten physischen Raum anzeigt, mindestens auf Basis der bestimmten Signalunterraumausdehnungen und der Signalunterraumeigenvektoren;
wobei: das Erzeugen der Ausgabe, die eine Anwesenheit oder Aktivität anzeigt, mindestens auf Basis der Signalunterraumeigenvektoren das Erzeugen der Ausgabe in Abhängigkeit von den differenziellen Signalunterraumunitaritätsmaßen umfasst und/oder das Trainieren des Maschinenlernmodells zum Erzeugen der Ausgabe, die eine Anwesenheit oder Aktivität in einem definierten physischen Raum anzeigt, ferner das Trainieren des Maschinenlernmoduls unter Verwendung der bestimmten differenziellen Signalunterraumunitaritätsmaße umfasst.

2. Vorrichtung nach Anspruch 1, wobei jedes bzw. jeder der Vielzahl von Arrays oder Tensoren einen Kanalimpuls oder Frequenzgang auf einer oder mehreren einer Übertragungsseite, einer Empfangsseite und über eine Verzögerungsstreuung eines drahtlosen Multiple-Input-Multi-Output-Übertragungssystems zu einer jeweiligen Zeitinstanz beschreibt.

3. Vorrichtung nach Anspruch 1 oder Anspruch 2, wobei die Ausgabe, die eine Anwesenheit oder eine Aktivität anzeigt, unter Verwendung von Maschinenlernwerkzeugen erzeugt wird.

4. Vorrichtung wie in einem der Ansprüche 1 bis 3 beansprucht, wobei:
das Maschinenlernmodell ferner auf Basis von Rauschunterraumeigenvektoren und/oder bestimmten Rauschunterraumausdehnungen trainiert wird; und/oder
die Ausgabe, die eine Anwesenheit oder Aktivität im definierten Raum anzeigt, ferner auf Rauschunterraumeigenvektoren und/oder bestimmten Rauschunterraumausdehnungen basiert.

5. Vorrichtung nach einem der vorhergehenden Ansprüche, die ferner ein Mittel zum Extrahieren von Rauschunterraumeigenvektoren aus den eigenzerlegten Korrelationsmatrices zu jeder Zeitinstanz für einen bestimmten Rauschunterraum umfasst.

6. Vorrichtung nach Anspruch 5, die ferner ein Mittel zum Erzeugen von differenziellen Rauschunterraumunitaritätsmaßen mindestens unter Verwendung einiger der Rauschunterraumeigenvektoren des Rauschunterraums umfasst, wobei das Erzeugen von differenziellen Rauschunterraumunitaritätsmaßen das Erzeugen einer Anzeige von Änderungen der unitär der Eigenbasen und vorherigen entsprechende Eigenbasen des Rauschunterraums umfasst.

7. Vorrichtung nach Anspruch 6, wobei:
das Erzeugen der Ausgabe, die eine Anwesenheit oder Aktivität anzeigt, ferner das Erzeugen der Ausgabe in Abhängigkeit von den differenziellen Rauschunterraumunitaritätsmaßen umfasst; und/oder
das Trainieren des Maschinenlernmodells zum Erzeugen der Ausgabe, die eine Anwesenheit oder Aktivität in einem definierten physischen Raum anzeigt, ferner das Trainieren des Maschinenlernmoduls unter Verwendung der bestimmten differenziellen Rauschunterraumunitaritätsmaße umfasst.

8. Vorrichtung nach einem der vorhergehenden Ansprüche, wobei das Erzeugen der Ausgabe, die eine Anwesenheit oder Aktivität anzeigt, das Erzeugen einer Anzeige einer Reihe von Menschen und/oder einer Anzeige eines Aktivitätsniveaus von Menschen im definierten Raum umfasst.

9. Vorrichtung nach einem der vorhergehenden Ansprüche, wobei das Mittel zum Bestimmen einer Signalunterraumausdehnung das Verwenden einer Analyse eines mittleren quadratischen Fehlers, um zwischen dem Signalunterraum und dem Rauschunterraum zu unterscheiden, zur jeweiligen Zeitpunkt umfasst.

10. Vorrichtung nach Anspruch 9, wobei die Analyse eines mittleren quadratischen Fehlers nach einer Unterraumgrenze sucht, aus der sich eine objektive Verzerrung ergibt.

11. Vorrichtung nach einem der vorhergehenden Ansprüche, wobei die Mittel Folgende sind:
mindestens ein Prozessor; und
mindestens ein Speicher, der Computerprogrammcode beinhaltet, wobei der Computerprogrammcode dazu ausgelegt ist, von dem mindestens einen Prozessor ausgeführt zu werden.

12. Verfahren, das Folgendes umfasst:
Erzeugen von statistischen Kanalkorrelationsmatrices zu jeder einer Vielzahl von Zeitinstanzen aus einer Vielzahl von mehrdimensionalen Arrays oder Tensoren, wobei jedes bzw. jeder der Vielzahl von Arrays oder Tensoren einen Kanalimpuls oder Frequenzgang eines drahtlosen Multiple-Input-Multi-Output-Übertragungssystems zu einer jeweiligen Zeitinstanz beschreibt;
Eigenzerlegen der Korrelationsmatrices;
Bestimmen einer Signalunterraumausdehnung zu jeder Zeitinstanz durch Unterscheiden zwischen einem Signalunterraum und einem Rauschunterraum;
Extrahieren von Eigenvektoren aus den eigenzerlegten Korrelationsmatrices zu jeder Zeitinstanz mindestens für den bestimmten Signalunterraum;
Erzeugen von differenziellen Signalunterraumunitaritätsmaßen mindestens unter Verwendung der Signalunterraumeigenvektoren, wobei das Erzeugen von differenziellen Signalunterraumunitaritätsmaßen das Erzeugen einer Anzeige von Änderungen der Unitarität von Eigenbasen mit Bezug auf vorherige entsprechende Eigenbasen, die aus den Signalunterraumeigenvektoren bestehen, umfasst; und
Trainieren eines Maschinenlernmodells zum Erzeugen einer Ausgabe, die eine Anwesenheit oder Aktivität in einem definierten physischen Raum anzeigt, mindestens unter Verwendung der bestimmten Signalunterraumausdehnungen und der Signalunterraumeigenvektoren und/oder Erzeugen einer Ausgabe, die eine Anwesenheit oder Aktivität in einem definierten physischen Raum anzeigt, mindestens auf Basis der bestimmten Signalunterraumausdehnungen und der Signalunterraumeigenvektoren;
wobei: das Erzeugen der Ausgabe, die eine Anwesenheit oder Aktivität anzeigt, mindestens auf Basis der Signalunterraumeigenvektoren das Erzeugen der Ausgabe in Abhängigkeit von den differenziellen Signalunterraumunitaritätsmaßen umfasst und/oder das Trainieren des Maschinenlernmodells zum Erzeugen der Ausgabe, die eine Anwesenheit oder Aktivität in einem definierten physischen Raum anzeigt, ferner das Trainieren des Maschinenlernmoduls unter Verwendung der bestimmten differenziellen Signalunterraumunitaritätsmaße umfasst.

13. Computerprogramm, das Anweisungen umfasst, die, wenn sie auf einem Computer ausgeführt werden, den Computer veranlassen, mindestens Folgendes durchzuführen:
Erzeugen von statistischen Kanalkorrelationsmatrices zu jeder einer Vielzahl von Zeitinstanzen aus einer Vielzahl von mehrdimensionalen Arrays oder Tensoren, wobei jedes bzw. jeder der Vielzahl von Arrays oder Tensoren einen Kanalimpuls oder Frequenzgang eines drahtlosen Multiple-Input-Multi-Output-Übertragungssystems zu einer jeweiligen Zeitinstanz beschreibt;
Eigenzerlegen der Korrelationsmatrices;
Bestimmen einer Signalunterraumausdehnung zu jeder Zeitinstanz durch Unterscheiden zwischen einem Signalunterraum und einem Rauschunterraum;
Extrahieren von Eigenvektoren aus den eigenzerlegten Korrelationsmatrices zu jeder Zeitinstanz mindestens für den bestimmten Signalunterraum;
Erzeugen von differenziellen Signalunterraumunitaritätsmaßen mindestens unter Verwendung der Signalunterraumeigenvektoren, wobei das Erzeugen von differenziellen Signalunterraumunitaritätsmaßen das Erzeugen einer Anzeige von Änderungen der Unitarität von Eigenbasen mit Bezug auf vorherige entsprechende Eigenbasen, die aus den Signalunterraumeigenvektoren bestehen, umfasst; und
Trainieren eines Maschinenlernmodells zum Erzeugen einer Ausgabe, die eine Anwesenheit oder Aktivität in einem definierten physischen Raum anzeigt, mindestens unter Verwendung der bestimmten Signalunterraumausdehnungen und der Signalunterraumeigenvektoren und/oder Erzeugen einer Ausgabe, die eine Anwesenheit oder Aktivität in einem definierten physischen Raum anzeigt, mindestens auf Basis der bestimmten Signalunterraumausdehnungen und der Signalunterraumeigenvektoren;
wobei: das Erzeugen der Ausgabe, die eine Anwesenheit oder Aktivität anzeigt, mindestens auf Basis der Signalunterraumeigenvektoren das Erzeugen der Ausgabe in Abhängigkeit von den differenziellen Signalunterraumunitaritätsmaßen umfasst und/oder das Trainieren des Maschinenlernmodells zum Erzeugen der Ausgabe, die eine Anwesenheit oder Aktivität in einem definierten physischen Raum anzeigt, ferner das Trainieren des Maschinenlernmoduls unter Verwendung der bestimmten differenziellen Signalunterraumunitaritätsmaße umfasst.

## Revendications

1. Appareil comprenant :
un moyen pour générer des matrices de corrélation de canal statistiques à chacune d'une pluralité d'instances de temps à partir d'une pluralité de tableaux ou de tenseurs multidimensionnels, où chacun de la pluralité de tableaux ou de tenseurs décrit une impulsion de canal ou une réponse en fréquence d'un système de transmission sans fil multi-entrée, multi-sortie à une instance de temps respective ;
un moyen pour décomposer en propre lesdites matrices de corrélation ;
un moyen pour déterminer une étendue de sous-espace de signal à chaque instance de temps en distinguant un sous-espace de signal d'un sous-espace de bruit ;
un moyen pour extraire des vecteurs propres des matrices de corrélation décomposées en propre à chaque instance de temps pour au moins le sous-espace de signal déterminé ;
un moyen pour générer des mesures d'unitarité différentielle de sous-espace de signal en utilisant au moins les vecteurs propres de sous-espace de signal, où la génération de mesures d'unitarité différentielle de sous-espace de signal comprend la génération d'une indication de changements d'unitarité de bases propres par rapport à des bases propres correspondantes précédentes se composant des vecteurs propres de sous-espace de signal ; et
un moyen pour entraîner un modèle d'apprentissage machine pour générer une sortie indicative de présence ou d'activité dans un espace physique défini en utilisant au moins les étendues de sous-espace de signal déterminées et les vecteurs propres de sous-espace de signal et/ou un moyen pour générer une sortie indicative de présence ou d'activité dans un espace physique défini sur la base au moins des étendues de sous-espace de signal déterminées et desdits vecteurs propres de sous-espace de signal ;
dans lequel : la génération de la sortie indicative de présence ou d'activité sur la base au moins des vecteurs propres de sous-espace de signal comprend la génération de la sortie en fonction des mesures d'unitarité différentielle de sous-espace de signal et/ou l'entraînement du modèle d'apprentissage machine pour générer la sortie indicative de présence ou d'activité dans un espace physique défini comprend en outre l'entraînement du module d'apprentissage machine en utilisant les mesures d'unitarité différentielle de sous-espace de signal déterminées.

2. Appareil selon la revendication 1, dans lequel chacun de la pluralité de tableaux ou de tenseurs décrit une impulsion de canal ou une réponse en fréquence au niveau d'un ou plusieurs parmi un côté émission, côté réception et à travers un étalement de retard d'un système de transmission sans fil multi-entrée, multi-sortie à une instance de temps respective.

3. Appareil selon la revendication 1 ou la revendication 2, dans lequel la sortie indicative de présence ou d'activité est générée en utilisant des outils d'apprentissage machine.

4. Appareil tel que revendiqué dans l'une quelconque des revendications 1 à 3, dans lequel :
ledit modèle d'apprentissage machine est en outre entraîné sur la base de vecteurs propres de sous-espace de bruit et/ou d'étendues de sous-espace de bruit déterminées ; et/ou
la sortie indicative de présence ou d'activité dans l'espace défini est en outre basée sur des vecteurs propres de sous-espace de bruit et/ou des étendues de sous-espace de bruit déterminées.

5. Appareil selon l'une quelconque des revendications précédentes, comprenant en outre un moyen pour extraire des vecteurs propres de sous-espace de bruit des matrices de corrélation décomposées en propre à chaque instance de temps pour un sous-espace de bruit déterminé.

6. Appareil selon la revendication 5, comprenant en outre un moyen pour générer des mesures d'unitarité différentielle de sous-espace de bruit en utilisant au moins certains des vecteurs propres de sous-espace de bruit du sous-espace de bruit, dans lequel la génération de mesures d'unitarité différentielle de sous-espace de bruit comprend la génération d'une indication de changements d'unitaire des bases propres et bases propres correspondantes précédentes du sous-espace de bruit.

7. Appareil selon la revendication 6, dans lequel :
la génération de la sortie indicative de présence ou d'activité, comprend en outre la génération de la sortie en fonction des mesures d'unitarité différentielle de sous-espace de bruit ; et/ou
l'entraînement du modèle d'apprentissage machine pour générer la sortie indicative de présence ou d'activité dans un espace physique défini comprend en outre l'entraînement du module d'apprentissage machine en utilisant les mesures d'unitarité différentielle de sous-espace de bruit déterminées.

8. Appareil selon l'une quelconque des revendications précédentes, dans lequel la génération de la sortie indicative de présence ou d'activité inclut la génération d'une indication d'un nombre d'humains et/ou d'une indication de niveau d'activité d'humains dans l'espace défini.

9. Appareil selon l'une quelconque des revendications précédentes, dans lequel le moyen pour déterminer une étendue de sous-espace de signal comprend l'utilisation d'une analyse d'erreur quadratique moyenne pour distinguer le sous-espace de signal du sous-espace de bruit à l'instant de temps respectif.

10. Appareil selon la revendication 9, dans lequel l'analyse d'erreur quadratique moyenne recherche une limite de sous-espaces produisant une distorsion objective.

11. Appareil selon l'une quelconque des revendications précédentes, dans lequel les moyens sont :
au moins un processeur ; et
au moins une mémoire incluant un code de programme informatique, le code de programme informatique configuré pour être exécuté par le au moins un processeur.

12. Procédé comprenant :
la génération de matrices de corrélation de canal statistiques à chacune d'une pluralité d'instances de temps à partir d'une pluralité de tableaux ou de tenseurs multidimensionnels, où chacun de la pluralité de tableaux ou de tenseurs décrit une impulsion de canal ou une réponse en fréquence d'un système de transmission sans fil multi-entrée, multi-sortie à une instance de temps respective ;
la décomposition en propre desdites matrices de corrélation ;
la détermination d'une étendue de sous-espace de signal à chaque instance de temps en distinguant un sous-espace de signal d'un sous-espace de bruit ;
l'extraction de vecteurs propres des matrices de corrélation décomposées en propre à chaque instance de temps pour au moins le sous-espace de signal déterminé ;
la génération de mesures d'unitarité différentielle de sous-espace de signal en utilisant au moins les vecteurs propres de sous-espace de signal, où la génération de mesures d'unitarité différentielle de sous-espace de signal comprend la génération d'une indication de changements d'unitarité de bases propres par rapport à des bases propres correspondantes précédentes se composant des vecteurs propres de sous-espace de signal ; et
l'entraînement d'un modèle d'apprentissage machine pour générer une sortie indicative de présence ou d'activité dans un espace physique défini en utilisant au moins les étendues de sous-espace de signal déterminées et les vecteurs propres de sous-espace de signal et/ou la génération d'une sortie indicative de présence ou d'activité dans un espace physique défini sur la base au moins des étendues de sous-espace de signal déterminées et desdits vecteurs propres de sous-espace de signal ;
dans lequel : la génération de la sortie indicative de présence ou d'activité sur la base au moins des vecteurs propres de sous-espace de signal comprend la génération de la sortie en fonction des mesures d'unitarité différentielle de sous-espace de signal et/ou l'entraînement du modèle d'apprentissage machine pour générer la sortie indicative de présence ou d'activité dans un espace physique défini comprend en outre l'entraînement du module d'apprentissage machine en utilisant les mesures d'unitarité différentielle de sous-espace de signal déterminées.

13. Programme informatique comprenant des instructions qui, lorsqu'elles sont exécutées sur un ordinateur, amènent l'ordinateur à effectuer au moins ce qui suit :
générer des matrices de corrélation de canal statistiques à chacune d'une pluralité d'instances de temps à partir d'une pluralité de tableaux ou de tenseurs multidimensionnels, où chacun de la pluralité de tableaux ou de tenseurs décrit une impulsion de canal ou une réponse en fréquence d'un système de transmission sans fil multi-entrée, multi-sortie à une instance de temps respective ;
décomposer en propre lesdites matrices de corrélation ;
déterminer une étendue de sous-espace de signal à chaque instance de temps en distinguant un sous-espace de signal d'un sous-espace de bruit ;
extraire des vecteurs propres des matrices de corrélation décomposées en propre à chaque instance de temps pour au moins le sous-espace de signal déterminé ;
générer des mesures d'unitarité différentielle de sous-espace de signal en utilisant au moins les vecteurs propres de sous-espace de signal, où la génération de mesures d'unitarité différentielle de sous-espace de signal comprend la génération d'une indication de changements d'unitarité de bases propres par rapport à des bases propres correspondantes précédentes se composant des vecteurs propres de sous-espace de signal ; et
entraîner un modèle d'apprentissage machine pour générer une sortie indicative de présence ou d'activité dans un espace physique défini en utilisant au moins les étendues de sous-espace de signal déterminées et les vecteurs propres de sous-espace de signal et/ou générer une sortie indicative de présence ou d'activité dans un espace physique défini sur la base au moins des étendues de sous-espace de signal déterminées et desdits vecteurs propres de sous-espace de signal ;
dans lequel : la génération de la sortie indicative de présence ou d'activité sur la base au moins des vecteurs propres de sous-espace de signal comprend la génération de la sortie en fonction des mesures d'unitarité différentielle de sous-espace de signal et/ou l'entraînement du modèle d'apprentissage machine pour générer la sortie indicative de présence ou d'activité dans un espace physique défini comprend en outre l'entraînement du module d'apprentissage machine en utilisant les mesures d'unitarité différentielle de sous-espace de signal déterminées.
